# EUROPÄISCHE PATENTSCHRIFT

(11) **EP 0 971 136 B1**
(45) Veröffentlichungstag und Bekanntmachung des Hinweises auf die Patenterteilung: **13.03.2002**
(21) Anmeldenummer: 99109492.1
(22) Anmeldetag: 12.05.1999
(51) Int. Cl.: F16B 11/00, B29C 65/00, F16B 5/00

(54) **Verbindung von Bauteilen aus gleichen oder unterschiedlichen Materialien**
Connection of parts of the same or different material
La connection des éléments du même ou d'un outre matériau

(30) Priorität: 03.07.1998 DE 19829795
(43) Veröffentlichungstag der Anmeldung: 12.01.2000
(73) Patentinhaber: Siemens Duewag Schienenfahrzeuge GmbH, 47829 Krefeld (DE)
(72) Erfinder: Calomfirescu, Mikail, Dipl.-Ing., 45359 Essen (DE); Treutler, Helmut, Dipl.-Ing., 47798 Krefeld (DE)

(56) Entgegenhaltungen:
- WO-A-86/03536
- WO-A-96/32594
- DE-A- 3 122 150
- DE-A- 3 341 929
- DE-A- 3 920 676

## Beschreibung

Die Erfindung betrifft eine Verbindung von Bauteilen aus gleichen oder unterschiedlichen Materialien, wobei einander zugewandte Flächen dieser Bauteile durch einen Klebstoff gehalten sind, siehe z.B. DE-A-3 341 929.

Um eine modulare Bauweise realisieren zu können, ist eine Abkehr von der in vielen Anwendungsbereichen, beispielsweise im Schienenfahrzeugbau, üblichen Schweißtechnik wünschenswert bzw. erforderlich. Die Schweißtechnik läßt es außerdem in aller Regel nicht zu, Bauteile aus unterschiedlichen Materialien (z. B. Aluminium und Kunststoff) miteinander zu verbinden. Zum Stand der Technik gehören weiter in vielen Anwendungsbereichen anzutreffende Klebeverbindungen, die jedoch im Vergleich zur Schweißtechnik eine geringere Festigkeit haben. Deshalb und bei für den Klebstoff ungünstigen Belastungsrichtungen sind Klebeverbindungen häufig nicht einsetzbar.

Der Erfindung liegt die Aufgabe zugrunde, mit Hilfe der Klebetechnik eine Verbindung von Bauteilen zu schaffen, deren Dauerhaltbarkeit über die einer reinen Klebeverbindung wesentlich hinausgeht.

Diese Aufgabe wird erfindungsgemäß dadurch gelöst, daß jedes der beiden Bauteile mit zwei Laschen versehen ist, die in korrespondierender Fügestellung einerseits die Klebeflächen aufweisen und andererseits einen Hohlraum begrenzen, wobei in diesem Hohlraum zumindest ein keilförmiges Verbindungselement angeordnet ist, das nach entsprechendem Verschieben innerhalb des Hohlraumes eine Spannkraft auf die Laschen der Bauteile ausübt.

Vorteilhafte Ausgestaltungen der Erfindung sind in den Unteransprüchen angegeben.

Im weiteren wird die Erfindung anhand von Ausführungsbeispielen näher erläutert, die in der Zeichnung prinzipartig dargestellt sind. Die Fig. 1 bis 6 zeigen jeweils unterschiedlich gestaltete Verbindungen im Querschnitt, wobei die in Fig. 6 im ungespannten Zustand dargestellte Verbindung in Fig. 7 im gespannten Zustand gezeigt ist.

Die durch Kaltfügetechnik zu verbindenden Bauteile 1 und 2 können aus gleichen Materialien - z. B. Aluminium - oder aus unterschiedlichen Materialien - z. B. Aluminium und Kunststoff - bestehen.

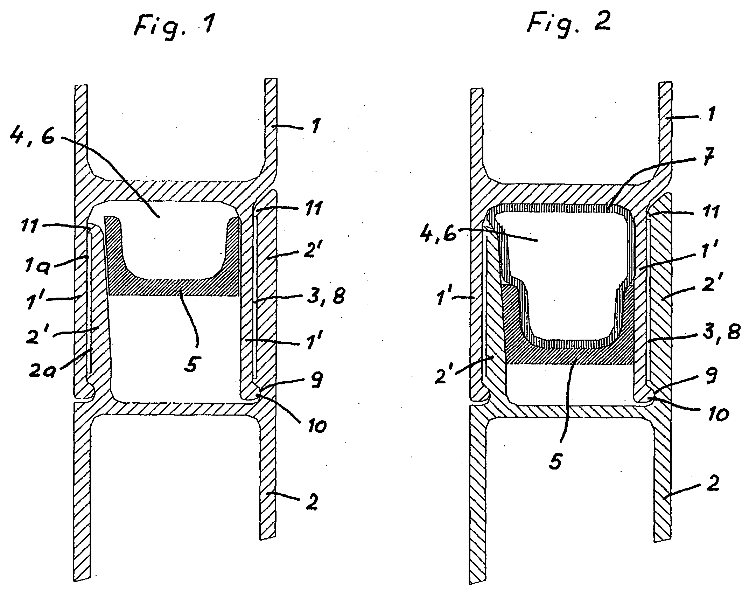

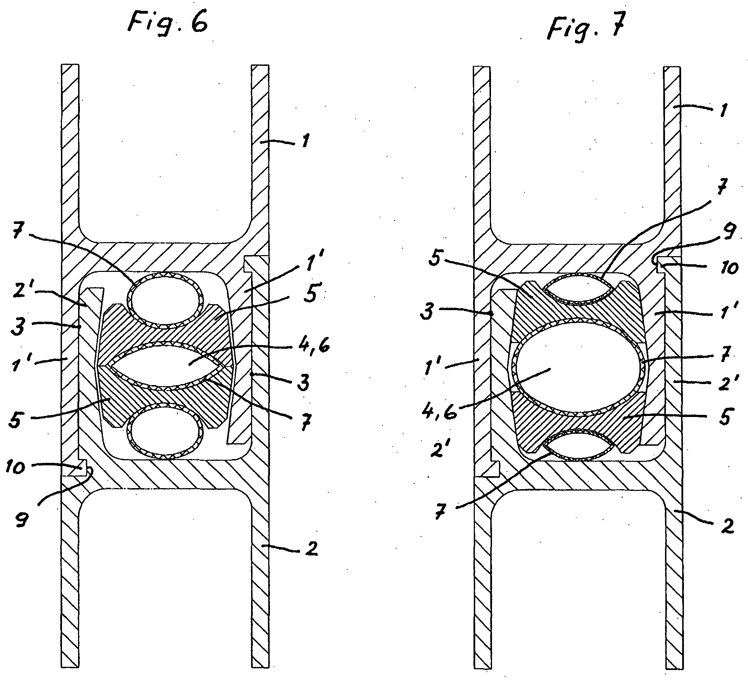

In allen Ausführungsbeispielen haben die Bauteile 1 und 2 jeweils zwei Laschen 1' und 2'. Die in der Fügestellung einander zugewandten Flächen 1a und 2a dieser Laschen 1' und 2' sind durch einen Klebstoff 3 großflächig gehalten, der im übrigen Dicht- und Isolierfunktionen ausübt. Die Laschen 1' und 2' begrenzen einen Hohlraum 4, in dem ein keilförmiges Verbindungselement 5 (siehe Fig. 1 bis 5) oder zwei keilförmige Verbindungselemente 5 (siehe Fig. 6 und 7) angeordnet sind. Nach entsprechendem Verschieben innerhalb des Hohlraumes 4 übt das jeweilige Verbindungselement 5 eine Spannkraft auf die Laschen 1' und 2' der Bauteile 1 und 2 aus.

Das Verspannen des keilförmigen Verbindungselements 5 kann mit Hilfe mechanischer Mittel - wie Spannschrauben - erfolgen, die allerdings eine Zugänglichkeit auch für entsprechende Werkzeuge voraussetzen. Ein von einer solchen Zugänglichkeit unabhängiges Verschieben des keilförmigen Verbindungselements 5 ist vorteilhaft möglich durch Einbringen eines gasförmigen oder flüssigen Druckmediums 6 in den Hohlraum 4. Dabei empfiehlt es sich, innerhalb des Hohlraumes einen geschlossenen Schlauchkörper 7 anzuordnen, der das Druckmedium 6 aufnimmt. Die abdichtende Funktion des Schlauchkörpers 7 kann alternativ eine Folie oder ein flüssiger Dichtungswerkstoff übernehmen.

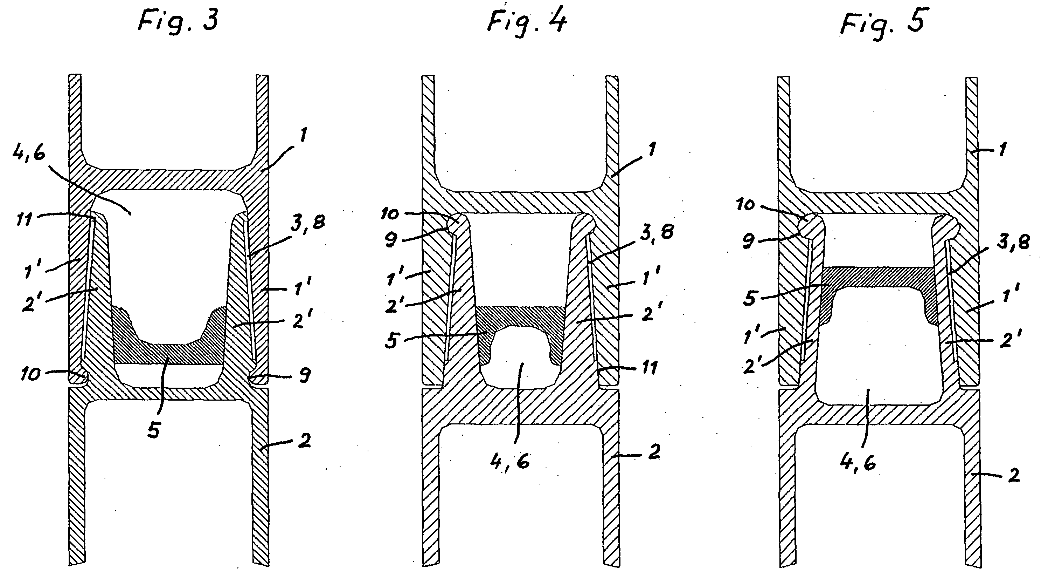

Den Fig. 1 und 2 ist die Möglichkeit zu entnehmen, das keilförmige Verbindungselement 5 an nur einer Seite mit einer Keilfläche zu versehen. Gemäß Fig. 3 bis 7 hat das keilförmige Verbindungselement 5 doppelte Keilflächen. Es versteht sich, die mit dem Verbindungselement 5 zusammenwirkenden Laschen 1' und 2' ebenso keilförmig auszubilden. Die Winkel der genannten Keilflächen sind unter Berücksichtigung der Reibungsverhältnisse zwischen dem Verbindungselement 5 und den Laschen 1' und 2' vorzugsweise so gewählt, daß Selbsthemmung eintritt; das verspannte Verbindungselement 5 kann sich also nicht selbsttätig lösen.

Um über einen Formschluß, der wahlweise außen (siehe z. B. Fig. 3) und/oder innen (siehe z. B. Fig. 1 bzw. Fig. 4) erfolgen kann, neben der Klebeverbindung eine zusätzliche Rastung zu realisieren, weisen die Laschen 1' und 2' der Bauteile 1 und 2 korrepondierende Nuten 9 und Leisten 10 auf. Zum einfachen Erzeugen dieses formschlüssigen Zusammenwirkens der Nuten 9 und der Leisten 10 sollte mindestens eines der zu verbindenden Bauteile 1 und 2 elastisch verformbar sein. Die Höhe der Anpreßkraft, die über das keilförmige Verbindungselement 5 auf den Formschluß wirkt, ist durch die Anordnung und Bewegungsrichtung dieses Elements 5 variabel: So ist die besagte Anpreßkraft beispielsweise bei der Verbindung nach Fig. 5 höher als bei der Verbindung nach Fig. 4.

Als Klebstoff 3 sind wärmhärtende Klebstoffe mit einer Festigkeit von beispielsweise bis hin 45 N/mm² einsetzbar, bei denen die Schichtdicke in einer Größenordnung von nur 0,5 mm liegen kann. Eine gezielte Erwärmung der Fügebereiche zum Aushärten derartiger Klebstoffe ist durch Temperieren des gasförmigen oder flüssigen Druckmediums auf günstige Weise möglich. Bei anderen, elastischen Klebstoffen mit einer Festigkeit von ca. 1,5 N/mm² ist die Schichtdicke in aller Regel größer, beispielsweise 4 mm. Vor allem für solche elastischen Klebstoffe ist es sinnvoll, zwischen den einander zugewandten Flächen 1a und 2a der Laschen 1'und 2' einen Spalt 8 vorzusehen, dessen Breite der jeweils gewünschten Schichtdicke des Klebstoffes 3 entspricht. Um hierbei eine definierte, gleichbleibende Festigkeit der Klebeverbindung zu erreichen und außerdem Spannungsspitzen in der Klebeschicht möglichst gering zu halten, wird die Breite des Spaltes 8 durch einen Ansatz 11 an den jeweiligen Laschen 1' und 2', der sich gegen die gegenüberliegenden Lasche 1' bzw. 2' abstützt, konstant gehalten. Zum Vermeiden von Spannungsspitzen in der Klebeschicht trägt bei, daß die Laschen 1' und 2' der Bauteile 1 und 2 sich zu ihren Enden hin verjüngen, um eine Schäftung zu erzielen.

Die Ausführungsbeispiele nach den Fig. 4 bis 5 mit innenliegendem Formschluß sind insbesondere für bleibende Verbindungen vorgesehen, die also nicht gelöst werden sollen. Für ein Lösen der in den Fig. 1 bis 3 dargestellten Verbindungen wird zunächst das Verbindungselement 5 vorzugsweise durch Einbringen von Druckmedium 6 in die entsprechende Kammer des Hohlraumes 4 aus der Wirkverbindung mit den Laschen 1' und 2' geschoben und alsdann die Klebeschicht auf thermische und/oder mechanische Weise gelöst, insbesondere durch Aufbiegen der in Zeichnungsebene linken, äußeren Lasche 1'. Gemäß Fig. 6 und 7 sind für das Verschieben der beiden Verbindungselemente 5 in Löserichtung zusätzliche Schlauchkörper 7 vorgesehen.

Die in den Fig. 6 und 7 gezeigten Bauteile 1 und 2 mit ihren Laschen 1' und 2' sind bezogen auf den Bereich der Verbindungsstelle identisch ausgebildet. Dadurch sind diese beiden Bauteile 1 und 2 vorteilhaft aus demselben Ursprungsprofil (z. B. Aluminium-Strangpreßprofil) herstellbar.

### Liste der Bezugszeichen

- 1: Bauteil (in der Zeichnung oben)
- 1': Lasche
- 1a: dem Bauteil 2 zugewandte Fläche
- 2: Bauteil (in der Zeichnung unten)
- 2': Lasche
- 2a: dem Bauteil 1 zugewandte Fläche
- 3: Klebstoff
- 4: Hohlraum
- 5: keilförmiges Verbindungselement
- 6: gasförmiges oder flüssiges Druckmedium
- 7: geschlossener Schlauchkörper
- 8: Spalt
- 9: Nut in den Laschen
- 10: Leiste an den Laschen
- 11: Ansatz an den Laschen

## Patentansprüche

1. Verbindung von Bauteilen (1, 2) aus gleichen oder unterschiedlichen Materialien, wobei einander zugewandte Flächen (1a, 2a) dieser Bauteile (1, 2) durch einen Klebstoff (3) gehalten sind, **dadurch gekennzeichnet, daß** jedes der beiden Bauteile (1, 2) mit zwei Laschen (1', 2') versehen ist, die in korrespondierender Fügestellung einerseits die Klebeflächen (1a, 2a) aufweisen und andererseits einen Hohlraum (4) begrenzen, wobei in diesem Hohlraum (4) zumindest ein keilförmiges Verbindungselement (5) angeordnet ist, das nach entsprechendem Verschieben innerhalb des Hohlraumes (4) eine Spannkraft auf die Laschen (1', 2') der Bauteile (1, 2) ausübt.

2. Verbindung nach Anspruch 1, **dadurch gekennzeichnet, daß** innerhalb des Hohlraumes (4) zwei gegenläufig veschiebbare keilförmige Verbindungselemente (5) angeordnet sind.

3. Verbindung nach Anspruch 1 oder 2, **dadurch gekennzeichnet, daß** für das Verschieben des keilförmigen Verbindungselements (5) bzw. der keilförmigen Verbindungselemente (5) ein gasförmiges oder flüssiges Druckmedium (6) in den Hohlraum (4) einbringbar ist.

4. Verbindung nach Anspruch 3, **dadurch gekennzeichnet, daß** innerhalb des Hohlraumes (4) ein geschlossener Schlauchkörper (7) angeordnet ist, der das gasförmige oder flüssige Druckmedium (6) aufnimmt.

5. Verbindung nach Anspruch 3 oder 4, **dadurch gekennzeichnet, daß** das gasförmige oder flüssige Druckmedium (6) für ein gezieltes Aushärten des Klebstoffes (3) temperierbar ist.

6. Verbindung nach einem der Ansprüche 1 bis 5, **dadurch gekennzeichnet, daß** die Laschen (1', 2') der Bauteile (1, 2) im Sinne eines formschlüssigen Zusammenwirkens korrespondierende Nuten (9) und Leisten (10) aufweisen.

7. Verbindung nach einem der Ansprüche 1 bis 6, **dadurch gekennzeichnet, daß** die Laschen (1', 2') der Bauteile (1, 2) sich zu ihren Enden hin verjüngen, um eine Schäftung zu erzielen.

8. Verbindung nach einem der Ansprüche 1 bis 7, **dadurch gekennzeichnet, daß** zwischen den einander zugewandten Flächen (1a, 2a) der Laschen (1', 2') ein Spalt (8) vorgesehen ist, dessen Breite der jeweils gewünschten Schichtdicke des Klebstoffes (3) entspricht.

9. Verbindung nach Anspruch 8, **dadurch gekennzeichnet, daß** die Breite des Spaltes (8) durch einen Ansatz (11) an der Lasche (1', 2') des einen Bauteils (1, 2), der sich gegen die Lasche (1', 2') des anderen Bauteils (1, 2) abstützt, konstant gehalten wird.

10. Verbindung nach einem der Ansprüche 1 bis 9, **dadurch gekennzeichnet, daß** die Bauteile (1, 2) mit ihren Laschen (1', 2') bezogen auf den Bereich der Verbindungsstelle identisch ausgebildet und dadurch aus demselben Ursprungsprofil herstellbar sind (siehe Fig. 6 und 7).

## Claims

1. A connexion for components (1, 2) of the same or different materials, wherein mutually facing faces (1a, 2a) of the said components (1, 2) are held by an adhesive (3), **characterized in that** each of the two components (1, 2) is provided with two fastening plates (1', 2') which in a mutually aligned joined position have the adhesion faces (1a, 2a) on the one hand and bound a cavity (4) on the other hand, wherein at least one wedge-shaped connecting member (5) is arranged in the said cavity (4) and exerts a stressing force upon the fastening plates (1', 2') of the components (1, 2) after a suitable displacement inside the cavity (4).

2. A connexion according to Claim 1, **characterized in that** two wedge-shaped connecting members (5) displaceable in opposite directions are arranged inside the cavity (4).

3. A connexion according to Claim 1 or 2, **characterized in that** a gaseous or liquid pressure medium (6) can be introduced into the cavity (4) for displacing the wedge-shaped connecting member or members (5).

4. A connexion according to Claim 3, **characterized in that** a closed tube member (7) receiving the gaseous or liquid pressure medium (6) is arranged inside the cavity (4).

5. A connexion according to Claim 3 or 4, **characterized in that** the gaseous or liquid pressure medium (6) can be tempered for a desired setting of the adhesive (3).

6. A connexion according to one of Claims 1 to 5, **characterized in that** the fastening plates (1', 2') of the components (1, 2) have grooves (9) and ridges (10) corresponding in the manner of a positively locking cooperation.

7. A connexion according to one of Claims 1 to 6, **characterized in that** the fastening plates (1', 2') of the components (1, 2) taper inwardly towards the ends thereof in order to produce an overlapping joint.

8. A connexion according to one of Claims 1 to 7, **characterized in that** a gap (8), the width of which corresponds to the thickness of the layer of the adhesive (3) desired in each case, is provided between the mutually facing faces (1a, 2a) of the fastening plates (1', 2').

9. A connexion according to Claim 8, **characterized in that** the width of the gap (8) is kept constant by an attachment (11) on the fastening plate (1', 2') of one component (1, 2) supported against the fastening plate (1', 2') of the other component (1, 2).

10. A connexion according to one of Claims 1 to 9, **characterized in that** the components (1, 2) with the fastening plates (1', 2') thereof are designed identically with respect to the region of the connecting position and, as a result, can be produced from the same original section (*vide* Figs. 6 and 7).

## Revendications

1. Solidarisation d'éléments structurels (1, 2) en des matériaux identiques ou différents, des surfaces (1a, 2a) de ces éléments structurels (1, 2), situées en regard les unes des autres, étant retenues par un adhésif (3), **caractérisée par le fait que** chacun des deux éléments structurels (1, 2) est muni de deux pattes (1', 2') qui, en position d'assemblage coïncidente, présentent d'une part les surfaces de collage (1a, 2a) et délimitent d'autre part une cavité (4), cette cavité (4) renfermant au moins un élément cunéiforme de solidarisation (5) qui applique, après coulissement correspondant à l'intérieur de la cavité (4), une force de serrage aux pattes (1', 2') des éléments structurels (1, 2).

2. Solidarisation selon la revendication 1, **caractérisée par le fait que** deux éléments cunéiformes de solidarisation (5), pouvant coulisser en sens inverse, sont logés à l'intérieur de la cavité (4).

3. Solidarisation selon la revendication 1 ou 2, **caractérisée par le fait qu'**un fluide pressurisé (6), gazeux ou liquide, peut être introduit dans la cavité (4) en vue du coulissement respectif de l'élément cunéiforme de solidarisation (5), ou des éléments cunéiformes de solidarisation (5).

4. Solidarisation selon la revendication 3, **caractérisée par le fait qu'**un corps fermé (7) en un tuyau souple, disposé à l'intérieur de la cavité (4), reçoit le fluide pressurisé (6) gazeux ou liquide.

5. Solidarisation selon la revendication 3 ou 4, **caractérisée par le fait que** la température du fluide pressurisé (6), gazeux ou liquide, peut être équilibrée en vue d'un durcissement adéquat de l'adhésif (3).

6. Solidarisation selon l'une des revendications 1 à 5, **caractérisée par le fait que** les pattes (1', 2') des éléments structurels (1, 2) comportent des rainures (9) et des languettes (10) coïncidentes, en vue d'une coopération par concordance de formes.

7. Solidarisation selon l'une des revendications 1 à 6, **caractérisée par le fait que** les pattes (1', 2') des éléments structurels (1, 2) se rétrécissent en direction de leurs extrémités, afin d'obtenir un assemblage en sifflet.

8. Solidarisation selon l'une des revendications 1 à 7, **caractérisée par le fait qu'**il est prévu, entre les surfaces (1a, 2a) des pattes (1', 2') mutuellement en vis-à-vis, un interstice (8) dont la largeur correspond à l'épaisseur respectivement souhaitée de la couche d'adhésif (3).

9. Solidarisation selon la revendication 8, **caractérisée par le fait que** la largeur de l'interstice (8) est maintenue constante par l'intermédiaire d'un mentonnet (11) situé sur la patte (1', 2') de l'un (1, 2) des éléments structurels, et prenant appui contre la patte (1', 2') de l'autre élément structurel (1, 2).

10. Solidarisation selon l'une des revendications 1 à 9, **caractérisée par le fait que** les pattes (1', 2') des éléments structurels (1, 2) sont de réalisation identique par rapport à la région de la zone de liaison, de sorte que lesdits éléments peuvent être produits à partir du même profil initial (voir les figures 6 et 7).
